# EUROPEAN PATENT APPLICATION

(11) **EP 1 882 891 A2**
(43) Date of publication of application: **30.01.2008**
(21) Application number: 07106222.8
(22) Date of filing: 16.04.2007
(51) Int. Cl.: F25B 27/02, F25B 13/00

(54) **CO-Generation**

(30) Priority: 27.07.2006 KR 20060070794
(71) Applicant: LG Electronics Inc., Seoul, 150-721 (KR)
(72) Inventor: Cho, Eun Jun, Sosa-ku Buchun-si Kyunggi-do 422-751 (KR); Ha, Sim Bok, Kyungki-do 423-017 (KR); Kim, Cheol Min, Kyungsangnam-do 641-180 (KR); Chang, Se Dong, Kyungki-do 423-060 (KR)
(74) Representative: Vossius & Partner

(57) **Abstract**

Disclosed related to a co-generation according to the present invention comprising an electric generator (110), an engine (120), a waste heat recovery heat exchanger (130) where the waste heat of the engine (120) is recovered, a water boil heat exchanger (70) connected with the waste heat recovery heat exchanger (130) and the heat transfer path (170), a hot water storage tank (80) connected with the water boil heat exchanger (70) and the water circulation path (81), a water boil heat exchanger bypassing path (87) formed at the water circulation path (81), a water boil heat exchanger bypassing valve (88) installed at the water boil heat exchanger bypassing path. The co-generation of the present invention has some advantages in that the entire length of the exhaust pipe and the installing costs are reduced as the numbers of the long pipes are reduced compared with the case that the water boil heat exchanger (70) and the water boil heat exchanger bypassing valve (87) are installed at the outside of the engine unit (EN) as all of the electric generator (110), engine (120), the waste heat recovery heat exchanger (130), the water boil heat exchanger (70), the water heat exchanger bypassing path (87), and the water boil heat exchanger bypassing valve (88) are installed at the engine unit (EN).

## Description

The present invention relates to a co-generation and, more particularly, to a co-generation that both of a water boiling heat exchanger and an engine are installed at an engine unit.

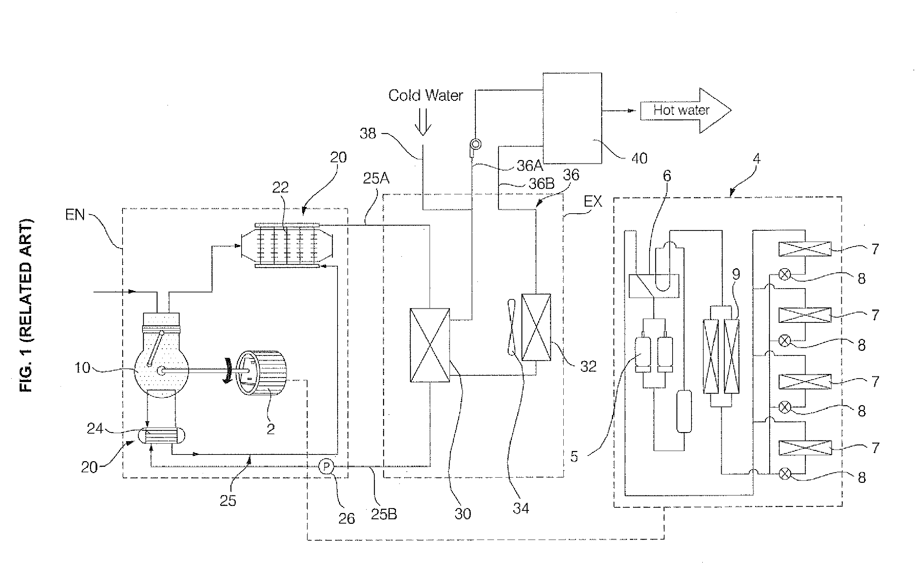

FIG. 1 is a block diagram of a co-generation according to the conventional art.

The conventional go-generation comprises an engine unit EN that an electric generator 2 and an engine 10 are installed therein, and a heat exhaust unit EX that a water boil heat exchanger 30 and a radiant heat exchanger 32 are installed therein as illustrated in FIG. 1.

The engine unit EN is installed underground.

The electricity generated in the electric generator 2 is supplied to the various home illuminants or home appliances such as heat pump type air conditioner 4.

Here, the heat pump type air conditioner 4 comprises a compressor 5, a 4-way valve 6, an indoor heat exchanger 7, an expansion apparatus 8, and an outdoor heat exchanger 9.

The heat pump type air conditioner 4 takes heat of the indoor air as the outdoor heat exchanger 9 is functioning as a condenser, and the indoor heat exchanger 7 is functioning as an evaporator, as the refrigerant compressed at the compressor 5 is circulated to the compressor 5 after passing through the 4-way valve 6, the outdoor heat exchanger 9, the expansion apparatus 8, the indoor heat exchanger 7, and the 4-way valve 6 in regular sequence during the air heating operation.

On the other hand, as the refrigerant compressed in the compressor 5 is circulated to the compressor as passing the order of the 4-way valve 6, the indoor heat exchanger 7, the expanding apparatus 8, outdoor heat exchanger 9, and the 4-way valve 6 when the heat pump type air conditioner 4 is in a heating operation, therefore, outdoor heat exchanger 9 operating as a evaporator and the indoor heat exchanger 7 operating as a condenser warm the indoor air.

A waste heat recovery heat exchanger 20 recovering the waste heat generated the engine 10 is installed at the engine unit EN.

The waste heat recovery heat exchanger 20 includes an exhaust gas heat exchanger 22 taking the heat of the exhaust gas exhausted from the engine 10, and a coolant heat exchanger 24 taking the heat of the coolant which refrigerates the engine 10.

The exhaust gas heat exchanger 22 and the coolant heat exchanger 24 are connected with the water boil heat exchanger 30 and the heat supplying line 25, and the waste heat of the engine 10 is transferred to the water boil heat exchanger 30 through the heat supply line 25.

A heat medium pump 26 circulating the heat medium such as the anti freezing solution through the exhaust gas heat exchanger 22, the coolant heat exchanger 24 and the water boil heat exchanger 30 is installed at the heat supplying line 25.

The heat exhaust unit EX is installed at the outdoor.

A heat exhaust fan 34 sending the outdoor air into the radiant heat exchanger 32 is installed at the heat exhaust unit EX.

A water circulation path 36 connecting the radiant heat exchanger 32 and the hot water storage tank 36 is installed at the water boil heat exchanger 30.

The hot water storage tank 36 is normally installed underground.

The water supply path 38 supplying cold water to the water circulation path 36 is installed at the water circulation path 36.

At the conventional co-generation configured as above, the waste heat is recovered at the waste heat recovery heat exchanger 20 during the operation of the engine, the heat medium of the heat supply line 25 receives heat while passing the waste heat recovery heat exchanger 20, is transferred to outdoor from underground, and is circulated to the waste heat recovery heat exchanger 20 of the engine unit installed underground after heating the water boil heat exchanger 30 of the heat exhaust unit EX installed outdoor during the operation of the engine.

Further, the hot water of the hot water storage tank 36 installed underground supplied to the water boil heat exchanger 30 of the heat exhaust unit EX installed outdoor through the water circulation path 36, the cold water of the water supply path 38 connected with underground is supplied to the water heat exchanger 30 of the heat exhaust unit EX through the water circulation path 38 positioned in the inside of the heat exhaust unit EX as transferred to outdoor, and the cold water is supplied to the hot water storage tank 40 after boiled while passing the water boil heat exchanger 30.

The co-generation according to the conventional art has a disadvantage that the efficiency is not maximized as the waste heat of the engine 10 is not used for the heat pump type air conditioner 4, but only used for the water boiling.

Furthermore, the installing of pipes is difficult and the costs get bigger with arranging at least five of long pipes as the two parts 25A and 25B of the long heat transfer line 25 is arranged between the underground where the engine unit is installed EN and the outdoor where the heat exhaust unit EX, the two parts 36A and 36B of the long water circulation path 36 is installed between the underground where the hot water storage tank 40 is installed and the outdoor where the heat exhaust unit EX, and the long water supply path 38 is arranged from the underground to outdoor where the heat exhaust unit EX is installed.

The present invention is contrived to overcome the above-mentioned conventional problems, and an object of the present invention is to provide a co-generation minimizing the long pipes that is, the connecting pipes and install costs as positioning the parts of the water boil heat exchanger and etc properly.

Another object of the present invention is to provide a co-generation improving the air-cooling capacity.

The co-generation according to the present invention to achieve the above-mentioned object comprises an electric generator; an engine operating the electric generator; a waste heat recovery heat exchanger recovering the waste heat of the engine; a water boil heat exchanger boiling water; a hot water storage tank connected with the water boil heat exchanger and the water circulation path; a water supply path connected with the water circulation path; a water boil heat exchanger bypassing path formed at the water circulation path; a water heat exchanger bypassing valve controlling the water boil heat exchanger bypassing path; an air conditioner air conditioning the indoor air; a supply heat exchanger installed on the refrigerant path of the air conditioner; and a heat transfer path connecting the waste heat recovery heat exchanger, the water boil heat exchanger, and the supply heat exchanger ; and the all the engine, the electric generator, the waste heat recovery heat exchanger, the water boil heat exchanger, the water boil heat exchanger bypassing path, and the water boil heat exchanger bypassing valve are installed at the engine unit.

The engine unit is installed underground of the structure at which the co-generation is installed.

The hot water storage tank is installed underground of the above building.

A water supply path is connected with the water circulation path.

The co-generation further comprises a radiant heat exchanger connected with the heat transfer path for radiating heat to outside; a water boil/ radiant heat exchanger bypassing path and a water boil/radiant heat exchanger bypassing valve formed at the heat transfer path; a radiant heat exchanger bypassing path and a radiant heat exchanger bypassing valve formed at the heat transfer path; and a supply heat exchanger bypassing path and a supply heat exchanger bypassing valve formed at the heat transfer path.

All of the radiant heat exchanger, the radiant heat exchanger bypassing path, the radiant heat exchanger bypassing valve, the supply heat exchanger bypassing path, and the supply heat exchanger bypassing valve are installed at the heat exhaust unit.

The heat exhaust unit is installed near the air conditioner.

The heat transfer path is installed as long through the engine unit, the heat exhaust unit, and the supply heat exchanger.

The water boil/ radiant heat exchanger bypassing path is installed as long through the engine unit and exhaust unit.

The water boil/ radiant heat exchanger bypassing valve is installed at the engine unit.

The air conditioner is composed of a heat pump type air conditioner including a compressor, a 4-way valve, an outdoor heat exchanger, an outdoor expansion valve, an outdoor machine installed outdoor, and an indoor machine including an indoor heat exchanger and an indoor expansion valve.

The supply heat exchanger is installed at the inside of the outdoor machine.

The co-generation according to the present invention configured as above has an advantage in that the entire pipe length becomes shorter and the installing costs become reduced as the number of the long pipes becomes less than the case of installing the water boil heat exchanger and the water boil bypassing path at the outside of the engine unit, as installing the engine, the electric generator, the waste heat recovery heat exchanger, the water boil heat exchanger, the water boil heat exchanger bypassing path, and the water boil heat exchanger are installed at the engine unit altogether.

Moreover, the co-generation of the present invention has some advantages in that the refrigerant becomes well super cooled while passing through the supply heat exchanger, the shortage of the refrigerant is prevented, and the air warming capacity isn't reduced as the refrigerant condensed at the outdoor heat exchanger is condensed at the supply heat exchanger.
FIG. 1 is a block diagram of the co-generation according to the conventional art,
FIG. 2 is a block diagram illustrating the air conditioner of an embodiment of the co-generation according to the present invention operating for air-cooling and under water boil mode,
FIG. 3 is a block diagram illustrating the air conditioner of an embodiment of the co-generation according to the present invention operating for air-cooling under the not water boil mode,
FIG. 4 is a block diagram illustrating the condition that the air conditioner of an embodiment of the co-generation according to the present invention operates for air warming under the outdoor fan control mode and the water boil mode,
FIG. 5 is a block diagram illustrating the air conditioner of an embodiment of the co-generation according to the present invention operating for air warming under the low-pressure control mode and the water boil mode,
FIG. 6 is a block diagram illustrating the air conditioner of an embodiment of the co-generation according to the present invention operating for air warming under the maximum supply mode and the not water boil mode,
FIG. 7 is a block diagram illustrating the air conditioner of another embodiment of the co-generation according to the present invention operating for air-cooling under the not water boil mode,
FIG. 8 is a block diagram illustrating the air conditioner of another embodiment of the co-generation according to the present invention operating for air-cooling under the not water boil mode,
FIG. 9 is a block diagram illustrating the condition that the air conditioner of another embodiment of the co-generation according to the present invention operates for air warming under the outdoor fan control mode and the water boil mode,
FIG. 10 is a block diagram illustrating the air conditioner of an embodiment of the co-generation according to the present invention operating for air warming under the low-pressure control mode and the water boil mode,
FIG. 11 is a block diagram illustrating the air conditioner of an embodiment of the co-generation according to the present invention operating for air warming under the maximum supply mode and the not water boil mode,

Reference will now be made in detail hereinafter as for the preferred embodiment of the co-generation in accordance with the present invention with reference to the accompanying drawings.

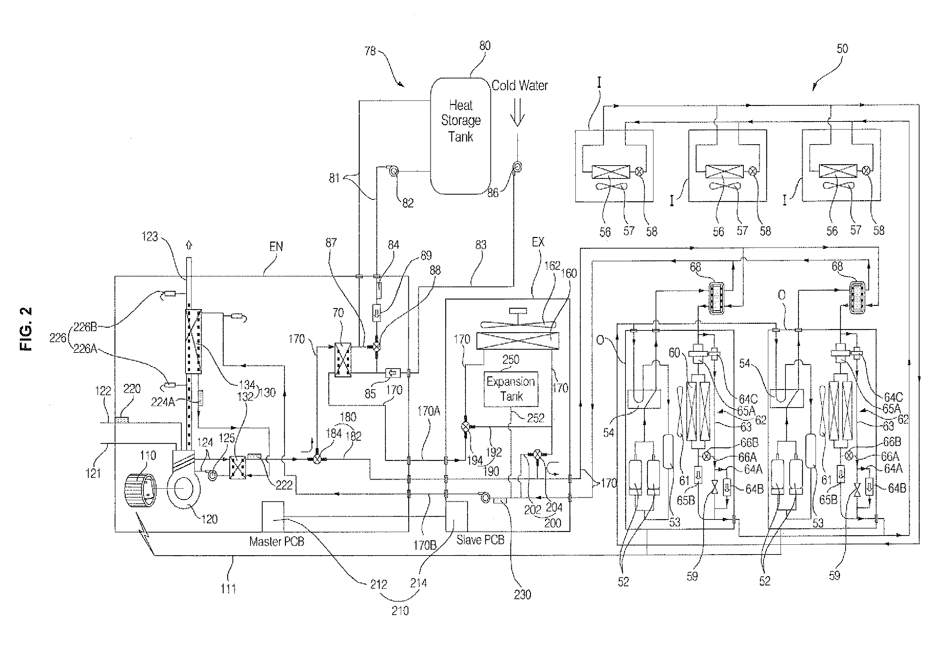

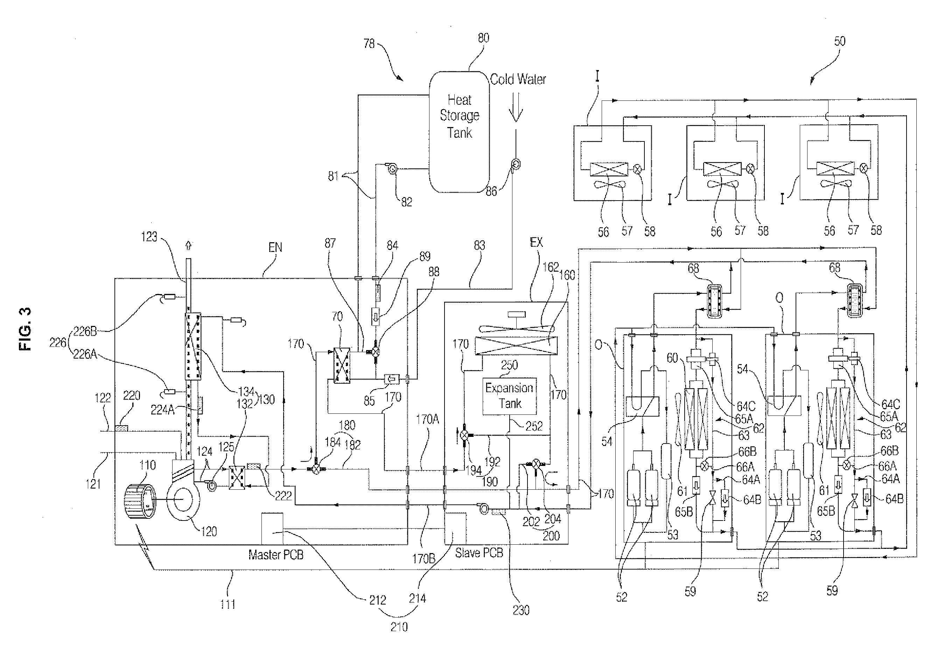

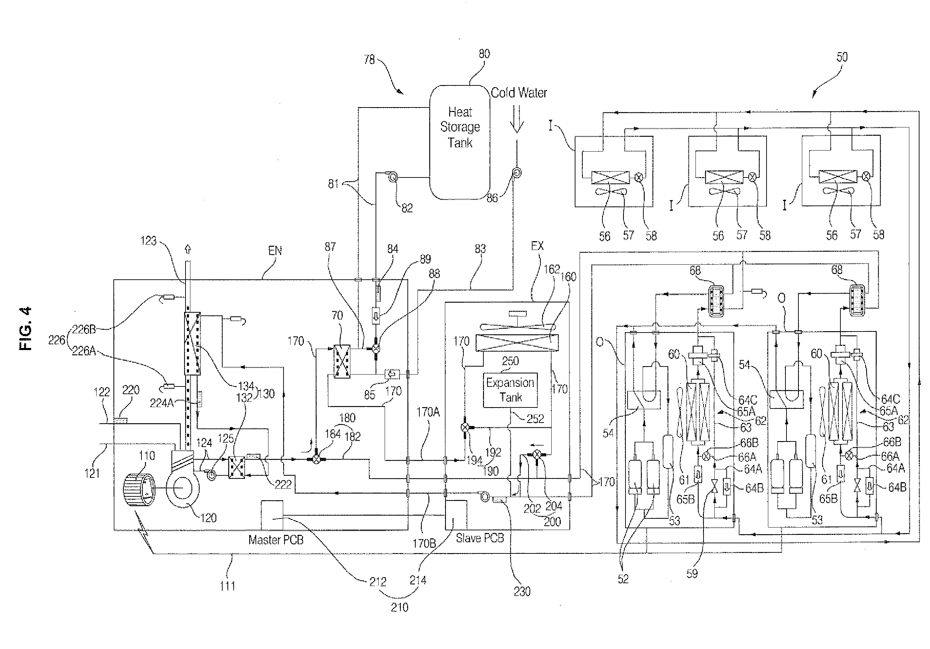

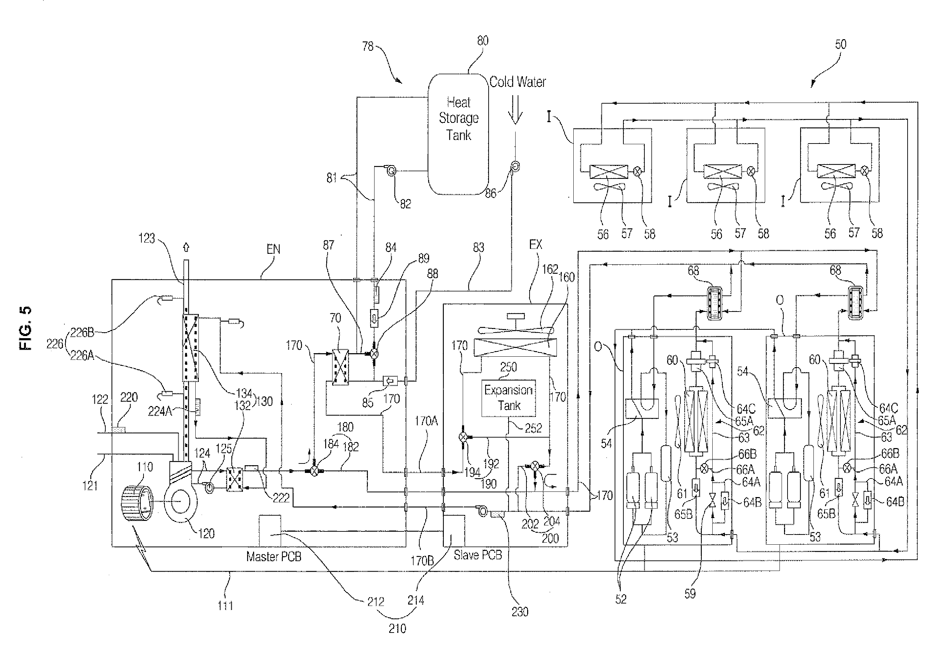

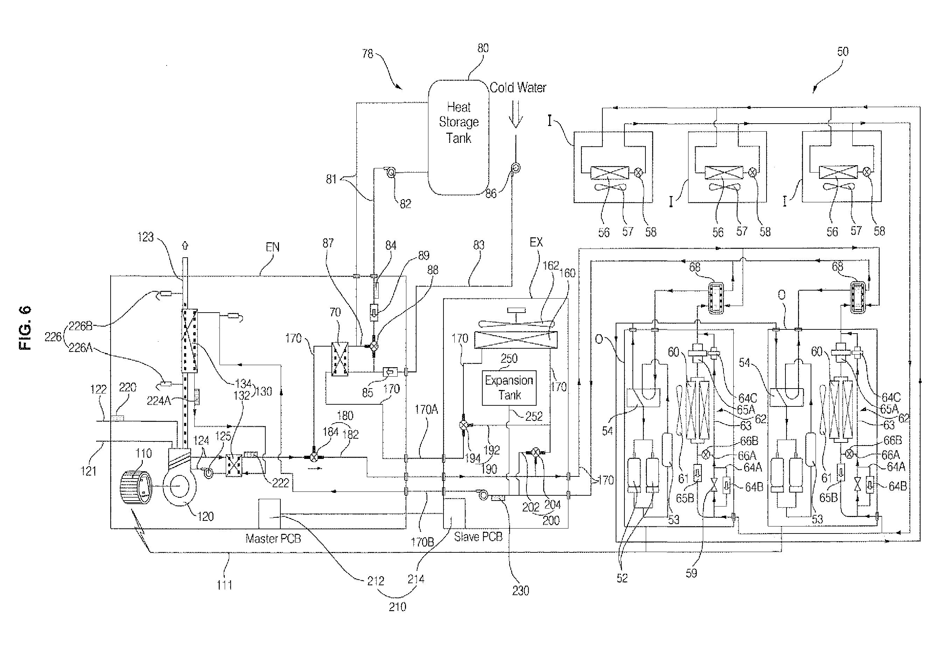

FIG. 1 is a block diagram of the co-generation according to the conventional art, FIG. 2 is a block diagram illustrating the air conditioner of an embodiment of the co-generation according to the present invention operating for air-cooling and under water boil mode, FIG. 3 is a block diagram illustrating the air conditioner of an embodiment of the co-generation according to the present invention operating for air-cooling under the not water boil mode, FIG. 4 is a block diagram illustrating the condition that the air conditioner of an embodiment of the co-generation according to the present invention operates for air warming under the outdoor fan control mode and the water boil mode, FIG. 5 is a block diagram illustrating the air conditioner of an embodiment of the co-generation according to the present invention operating for air warming under the low-pressure control mode and the water boil mode, and FIG. 6 is a block diagram illustrating the air conditioner of an embodiment of the co-generation according to the present invention operating for air warming under the maximum supply mode and the not water boil mode.

The co-generation according to the present embodiment comprises an air conditioner 50 coordinating the indoor, a water boil heat exchanger 70 boiling water, an electric generator 110 generating electricity, an operation element 120 operating the electric generator 110 and generating heat, and the heat of the exhaust gas exchanger 130 recovering the heat of the exhaust gas of the operation element 120 as illustrated in FIGS. 2 to 6.

It is possible for the air conditioner 50 to be composed of a heat pump type air conditioner including a compressor 52, a 4-way valve 54, an indoor heat exchanger 56, expansion apparatus 58 and 59, and an outdoor heat exchanger 60, and also possible to be composed of an exclusive air-cooling air conditioner including a compressor 52, an indoor heat exchanger 56, an expanding apparatus 58 and 59, and an outdoor heat exchanger 60, but not including the 4-way valve. The reference will now be made in detail as limited to the air conditioner composed of the heat pump type air conditioner on the following.

As the heat pump type air conditioner is composed of an outdoor machinery O and an indoor machinery I, it is possible that an indoor machinery I is connected with an outdoor machinery O, also possible that plural indoor machineries I are connected in a row with an outdoor machinery O, also possible that plural outdoor machineries O are connected in a row each other, and also possible that plural indoor machineries I are connected in a row each other.

The compressor 52, the 4-way valve 54, the indoor heat exchanger 56, the expansion apparatus 58, and the outdoor heat exchanger 60 are connected with the refrigerant laying pipe 61, a refrigerant flowing path.

An accumulator 53 in which the liquid refrigerant a part of refrigerant is accumulated is installed at the suction pipe through which the refrigerant is inhaled in the compressor 52.

The 4-way valve 54 controls the inner path for flowing the refrigerant compressed at the compressor 52 to the indoor heat exchanger 56 as illustrated in FIGS. 4 to 6 when the air heating operation of the heat pump type air conditioner 50, and controls the inner path for flowing the refrigerant compressed at the compressor 52 to the outdoor heat exchanger 60 as illustrated in FIGS. 2 and 3 when the air-cooling operation of the heat pump type air conditioner 50.

An indoor fan 57 sending indoor air to the indoor heat exchanger 56 is installed beside the indoor heat exchanger 56.

The expansion apparatus 58 and 59 are described as limited to be composed of a vessel or a linear expansion valve.

The expansion apparatus 58 and 59 include an indoor expansion valve 58 controlling each amount of the refrigerant of the each indoor machinery I as installed at the indoor machinery 1, and an outdoor expansion valve 59 expanding the refrigerant while the air heating operation as installed at the outdoor machinery O.

An outdoor fan 61 sending the outdoor air to the outdoor heat exchanger 60 is installed beside the outdoor heat exchanger 60.

The compressor 52, 4-way valve 54, outdoor expansion valve 59, and the outdoor heat exchanger 60 are installed at the outdoor machinery O.

The indoor heat exchanger 56 and the indoor expansion valve 58 are installed at the indoor machinery I,

The compressor 52, indoor fan 57, and the outdoor fan 61 of the heat pump type air conditioner 50 are operated by electricity generated by the electric generator 110.

The heat pump type air conditioner 50 further includes an outdoor heat exchanger bypassing apparatus 62 for bypassing of the refrigerant through the outdoor heat exchanger 60.

An end part of the outdoor heat exchanger bypassing apparatus 62 is connected with the refrigerant path connected with the inlet side of the outdoor heat exchanger 60, and the other end part is connected with the refrigerant path connected with the outlet side of the outdoor heat exchanger during the air-cooling operation or the air heating operation.

An outdoor expansion valve 59 is installed at the outdoor heat exchanger bypassing path 63.

An outdoor expansion valve bypass path bypassing the refrigerant flown into the outdoor heat exchanger bypassing path 63 during the air-cooling operation of the heat pump type air conditioner 50 through the outdoor expansion valve 59 is installed at the outdoor heat exchanger bypassing path 63.

A check valve 64B passing the refrigerant during the air-cooling operation of the heat pump type air conditioner 50, and passing the refrigerant through the outdoor expansion valve 59 as blocking during the air heating operation of the heat pump type air conditioner 50 is installed at the outdoor expansion valve bypassing path 66A.

An outdoor heat exchanger bypassing path opening and shutting valve 64C opening and shutting the outdoor heat exchanger bypassing path 63 is installed at the outdoor heat exchanger bypassing path 62.

The outdoor heat exchanger bypassing path 62 includes an outdoor heat exchanger opening and shutting valve 65A installed at the refrigerant path connected with outlet side of the outdoor heat exchanger 60 during the air heating operation.

The outdoor heat exchanger bypassing apparatus 62 includes a connection path connecting the refrigerant path connected with the inlet side of the outdoor heat exchanger 60 and the outdoor heat exchanger bypassing path 62 during the air heating operation, and the connection path opening and shutting valve 66B opening and shutting the connection path 66A.

A check valve 65B preventing the streaming of refrigerant into the outdoor heat exchanger 60 without passing through the outdoor expansion valve 59 is installed at the refrigerant path connected with the inlet side of the outdoor heat exchanger 60 of the outdoor heat exchanger bypassing apparatus 62 during the air heating operation of the heat pump type air conditioner.

Here, the outdoor heat exchanger bypassing apparatus 62, as illustrated in FIGS. 2 and 3, opens the outdoor heat exchanger bypassing path opening and shutting valve 64C as well as shutting the outdoor heat exchanger opening and shutting valve 65A during the air-cooling operation, shutting the connection path opening and shutting valve 66B, and the refrigerant bypasses the outdoor expansion valve 59 as well as by passing the outdoor heat exchanger 60.

The outdoor heat exchanger bypassing apparatus 62, as illustrated in FIG. 4, shuts the outdoor heat exchanger bypassing path opening and shutting valve 64C as well as opening the outdoor heat exchanger opening and shutting valve 65A during the outdoor fan control air heating operation, opening the connection path opening and shutting valve 66B, and the refrigerant passes through the outdoor heat exchanger 60 after passing through the outdoor expansion valve 59.

The outdoor heat exchanger bypassing apparatus 62, as illustrated FIGS. 5 and 6, opening the outdoor heat exchanger bypassing path opening and shutting valve 64C as well as shutting the outdoor heat exchanger opening and shutting valve 65A during the lo-pressure control air heating operation and maximum supply air heating operation, shutting the connection path opening and shutting valve 66B, and the refrigerant bypasses the outdoor heat exchanger 60 after passing through the outdoor expansion valve 59.

A supply heat exchanger 68 transferring the waste heat recovered at the waste heat recovery heat exchanger 130 installed at the engine unit to the heat pump type air conditioner 50 as a refrigerant, and transferring heat from the refrigerant of the heat pump type air conditioner 50 to the water boil heat exchanger 70 installed at the engine unit if necessary.

As the supply heat exchanger 68 is installed on the refrigerant path of the heat pump type air conditioner 50, it is installed on the refrigerant path between the 4-way valve 54 and the outdoor heat exchanger 60.

That is, it is possible for the supply heat exchanger 60 to be functioning as a condenser condensing the refrigerant during the air-cooling operation of the heat pump type air conditioner 50, and to be functioning as a evaporator evaporating the refrigerant during the air heating operation of the heat pump type air conditioner 50.

The engine unit EN is installed underground of the construction where the co-generation is installed.

A water boil heat exchanger 70 installed for water boiling ; an electric generator 110 generating electricity; an engine 120 operating the electric generator and generating heat; and a waste heat recovery heat exchanger 130 recovering the waste heat of the engine 120 are installed at the engine unit EN.

A water boil unit 78 boiling cold water or hot water after supplying to the water boil heat exchanger 70 is installed at the water boil heat exchanger 70,

The water boil unit 78 includes a hot water storage tank 80 containing water, and a water circulation path 81 connecting the hot water storage tank 80 and the water boil heat exchanger 70.

The hot water storage tank 80 is installed underground of the construction where the co-generation is installed.

The hot water storage tank 80, a kind of a heat storage tank storing the heat recovered a the water boil heat exchanger 70, and the water circulation path 81 circulates the water in the hot water storage tank 80 into the inside of the hot water storage tank 80 after supplied to the water heat exchanger 70 and passing through the water boil heat exchanger 70.

The water circulation path 81 is not extended to outdoor as the water boil heat exchanger 70 and the heat exhaust unit EX are installed at the engine unit EN.

The hot water storage tank water supply apparatus 82 supplying the water in the hot water storage tank 80 to the water circulation unit 82.

The hot water storage tank water supply apparatus 82 is composed of a hot water storage tank pump installed at the water circulation path 81 for pumping the water in the hot water storage tank 80 to be circulated to the hot water storage tank 80 after passing through the water boil heat exchanger.

A water supply path 83 is installed at the water circulation path 81 to supply water from outside to the water circulation path 82.

It is possible for the water supply path 83 to supply water of the water service to the water circulation path 81 as connected with the water service directly, or to supply the water in the water supply tank to the water circulation path 81 as connected with a separate water supply tank.

Here, the water boil heat exchanger 70 of the water supply path 83 is not installed at the exhaust unit, but installed at the engine unit, and is not extended long to out of doors as the water circulation path 81 is only installed underground.

A water temperature sensor 84 gauging the temperature of the water supplied to the water circulation path 82 from the hot water storage tank 80, a check valve 85 preventing the flowing backward of the water in the water circulation path 81 through the water supply path 83, and a water supply pump, a water supply apparatus 86, pumping water to the water supply path 83 are installed at the water supply path 83.

On the other hand, a water boil heat exchanger bypassing path 87 bypassing the water supplied from the hot water storage tank 80 to the water circulation path 81 through the water boil heat exchanger 130.

The water boiling unit 78 has a water heat exchanger bypassing valve 88 deciding the bypassing of the water supplied from the hot water storage tank 80 through the water boil heat exchanger is installed at the diverging point of the water circulation path 87 and the water boil heat exchanger bypassing path 87.

A check valve 89 is installed at the part between the hot water storage pump 82 and the water boil heat exchanger bypassing valve of the water circulation path 81.

The water boil heat exchanger bypassing path 87, the water boil heat exchanger bypassing valve 88, and the check valve 85 and 89 are installed at the engine unit EN, and a part of the water circulation unit 81 and a part of the water supply path 83 are installed at the inside of the engine unit EN of the water boiling unit 78.

The electric generator 110 supplies electricity to the heat pump type air conditioners 50 or the various electric instruments such as the various illuminants, as an alternating current generator or a direct current generator, and generates electricity during the rotation of the output shaft as a rotor is connected with the output shaft of the operation element 120.

The electric generator 110 supplies the electricity generated through a power line 111 as connected with the heat pump type air conditioner and etc by power the line 111.

The engine 120 is composed of a common engine operated as using the fossil fuel such as gas or petroleum and etc, and using fuel cells are also possible.

A fuel inlet 121 into which the fuel such as gas, petroleum and etc is poured, an intake 122 inhaling the outside air to the engine 120, and an exhaust pipe 123 through which the exhaust gas exhausted from the engine 120 passes are installed at the engine 120.

The waste heat recovery heat exchanger 130 is composed of a coolant heat exchanger 132 recovering the coolant heat of the engine 120 as connected with the engine through the coolant line 124, and a exhaust gas heat exchanger 134 installed on the exhaust pipe 123 for recovering of the exhaust gas heat exhausted from the engine 120.

A coolant circulation pump 125 for circulating the coolant through the engine 120 and the coolant heat exchanger 132 is installed at the engine 120 or the coolant line 124.

The heat exhaust unit EX is installed around the outdoor machine O.

A radiant heat exchanger 160 radiating a portion or the whole of the heat recovered at the waste heat recovery heat exchanger 130 to outside in accordance with its necessity is installed at the heat exhaust unit EX.

A heat radiant fan 162 sending the outside air to the radiant heat exchanger 160 is installed beside the radiant heat exchanger 160.

On the other hand, the co-generation includes a heat transfer apparatus 150 transferring heat of the waste heat recovery heat exchanger 130 to the water boil heat exchanger 70, the waste heat recovery heat exchanger 160, and the supply heat exchanger 68.

Here, it is possible for the heat transfer apparatus 150 to transfer the heat of the waste heat recovery heat exchanger 130 only to the water boil heat exchanger 70, the radiant heat exchanger 160, and the supply heat exchanger 68, or to transfer the heat of the waste heat recovery heat exchanger 130 to the water boil heat exchanger 70, the radiant heat exchanger 160, and the supply heat exchanger 68, and to transfer the heat of the supply heat exchanger 68 to the water boil heat exchanger 70.

As the water boiling capacity of the heat transferring apparatus 150 is maximized when the heat of the refrigerant is transferred to the water boil heat exchanger 70 during the air-cooling operation of the heat pump type air conditioner 50, the heat transferring apparatus 150 is described as limited that the heat of the heat of the exhaust gas exchanger 130 is transferred to the water boil heat exchanger 70 and the radiant heat exchanger 160, and the supply heat exchanger, and the heat of the supply heat exchanger 68 is transferred to the water boil heat exchanger 70, if necessary.

The heat transfer apparatus 150 includes a heat transfer path 170 connecting the waste heat recovery heat exchanger 130, the water heat exchanger 70, the radiant heat exchanger 160, and the supply heat exchanger 68.

On the other hand, as the heat transfer path 170 is positioned as long from the underground where the engine unit EN is installed to the out of door where the heat exhaust unit EX 160 and the outdoor machine O are installed, and especially, the exhaust pipes 170A and 170B arranged between the engine unit EN and the heat exhaust unit EX are positioned as long from underground to outside.

A heat medium circulation pump 172 for circulating of the heat medium such as an anti freezing solution-call heat medium on the following- through the heat of the exhaust gas exchanger 130, water heat exchanger 70, radiant heat exchanger 160, and the supply heat exchanger 68 is installed at the heat transfer path 170.

It is possible for the heat medium circulation pump 172 to be installed at the engine unit EN and at the heat exhaust unit EX.

On the other hand, as the heat transfer apparatus 150 transfers the heat recovered from the engine 120 the most suitably in accordance with the water boil, air-cooling/ air warming, and the condition of the outdoor temperature when the heat recovered from the engine, the heat medium passed through the heat of the exhaust gas exchanger 130, bypasses at least one of the water boil heat exchanger 70, radiant heat exchanger 160, and the supply heat exchanger 68, it is described as limited that the heat medium passed through the remained heat exchanger 130 bypasses through each of the heat exchanger 70, 160, and 68 on the following.

The heat transfer apparatus 150 further includes the water boil/radiant heat exchanger bypassing apparatus 180 formed for bypassing of the heat of the heat of the exhaust gas exchanger 130 through the water boil heat exchanger and the radiant heat exchanger.

The water boil/ radiant heat exchanger bypassing apparatus 180 includes a water boil/ radiant heat exchanger bypassing path 182 formed at the heat transfer path 170; and a water boil/ radiant heat exchanger bypassing valve 184 installed at the diverging point of the water boil/radiant heat exchanger bypassing path 182 and the heat transfer path 170.

The heat transfer apparatus 150 further includes a radiant heat exchanger bypassing apparatus 190 bypassing the heat of the heat of the exhaust gas exchanger 130 through the radiant heat exchanger 160.

The radiant heat exchanger bypassing apparatus 190 includes a radiant heat exchanger bypassing path 192 formed at the heat transfer path 170; and a radiant heat exchanger bypassing valve 194 installed at the diverging point of the radiant heat exchanger bypassing path 192 and the heat transfer path 170.

The heat transfer apparatus 150 further includes a supply heat exchanger bypassing apparatus 200 bypassing the heat of the heat of the exhaust gas exchanger 130 through the supply heat exchanger 68.

The supply heat exchanger bypassing apparatus 200 includes a supply heat exchanger bypassing path 202 formed at the heat transfer path 170 ; and a supply heat exchanger bypassing valve 204 installed at the diverging point of the supply heat exchanger bypassing path 202 and the heat transfer path 170.

Here, as the water boil/ radiant heat exchanger bypassing path 182 of the c-generation is not installed at the water boil heat exchanger 70 or the heat exhaust unit EX, but installed at the engine unit EN, it is extended as long from underground where the engine unit EN is installed to outside where the heat exhaust unit EX is installed.

The water boil/ radiant heat exchanger bypassing valve 184 of the co-generation is installed at the engine unit EN.

The radiant heat exchanger bypassing path 192, the radiant heat exchanger bypassing valve 194, the supply heat exchanger bypassing path 202, and the supply heat exchanger bypassing valve 204 of the co-generation are installed at the heat exhaust unit EX.

The co-generation further comprises a control unit 210 controlling the water boil/ radiant heat exchanger bypassing valve 184, the radiant heat exchanger bypassing valve 194, the supply heat exchanger bypassing valve 204, the outdoor heat exchanger opening and shutting valve 65A, the outdoor heat exchanger bypassing path opening and shutting valve 64C, and the connection path opening and shutting valve 66B in accordance with the air-cooling/ air warming and water boiling of the heat pump type air conditioner 50.

The control unit 210 is composed of a master PCB 212 installed at the engine unit EN, and a slave PBC 214 installed at the radiant heat unit EX and connected with the master PBC 212 by a control line.

The various kinds of sensors perceiving the temperature or the flux are installed at the co-generation.

The co-generation comprises an intake port temperature sensor 220 composed of a thermistor perceiving the temperature of outside air inhaled into the intake port 12, a coolant heat exchanger outlet temperature sensor 222 composed of a thermistor perceiving the temperature of the outlet of the coolant heat exchanger 132 of the heat transfer path 170, a waste gas heat exchanger outlet temperature sensor 224 composed of a thermistor 224A and RTD sensor 224B perceiving the temperature of the outlet of the waste gas heat exchanger 134 of the heat transfer path 170, and an exhaust pipe temperature sensor 226 composed of RTD sensors 226A, 226B perceiving the each temperature of front and rear of the waste gas heat exchanger 134 of the exhaust pipe 123.

The intake port temperature sensor 220, the coolant heat exchanger outlet temperature sensor 222, the waste gas heat exchanger outlet temperature sensor 224, and the exhaust pipe temperature sensor 226 are installed at the inside of the engine unit EN.

The co-generation comprises the No. 1 transfer path temperature sensor 230 perceiving the before temperature of the heat medium circulation pump 172 of the heat transfer path 170.

The No. 1 heat transfer path temperature sensor 230 is installed at the radiant heat unit EX.

The radiant heat unit EX is connected with the tank connection path 252 that an expansion tank 250 is connected between the heat medium circulation pump 172 and the supply heat exchanger bypassing path 202 of the heat transfer path 170.

Reference will now be made in detail as for the operation of the present invention configured as above.

First, when the engine 120 is operated, the electric generator 110 generates electricity as the rotor is rotated, and the generated electricity is supplied to the heat pump type air conditioner 50 through the power line 111 as illustrated in FIGS. 2 to 5.

The heat of the exhaust gas of the engine and the coolant heat of the exhaust gas are recovered at the heat of the exhaust gas exchanger 130, the coolant heat exchanger 132 and the exhaust gas heat exchanger 134 during the operation of the engine 120.

The co-generation controls the bypassing of the refrigerant through the outdoor heat exchanger 60 as well as operating the heat pump type air conditioner 50 to be an air-cooling mode when the heat pump type air-conditioner 50 is required of air-cooling and water boiling, and controls the heat medium of the heat transfer path 170 to be circulated through the heat exchanger the exhaust gas 130, water boil heat exchanger 70, and the supply heat exchanger 68.

The heat pump type air conditioner 50 controls the 4-way valve 54 to be an air-cooling mode as well as operating the compressor 52, opens the outdoor heat exchanger bypassing path opening and shutting valve 64C as well as shutting the outdoor heat exchanger opening and shutting valve 65A, and shuts the connection path opening and shutting valve 66B.

As describing the flowing of the refrigerant of the heat pump type air conditioner 50, the high temperature and high pressure refrigerant compressed at the compressor 52 is supplied to the supply heat exchanger 68 as passing through the 4-way valve 54, condensed as taken the heat away from the supply heat exchanger 68 when it passes through the supply heat exchanger 68, and bypasses the outdoor heat exchanger 60 after that.

The refrigerant bypassed the outdoor heat exchanger 60 is evaporated as transferred to the indoor heat exchanger 56 after transferred to the indoor machinery I and expanded at the indoor expansion valve 58, and after that, circulated to the compressor 52 through the 4-way valve 54 as transferred to the outdoor machinery O.

That is, the refrigerant of the heat pump type air conditioner is condensed at the supply heat exchanger 68, and cooling the indoor air as evaporated at the indoor heat exchanger 56.

On the other hand, the control unit 210 controls the water boil/radiant heat exchanger bypassing valve 184 to be the water boil/ radiant heat supply mode as well as operating the heat medium circulation pump 172 for circulation of the heat medium of the heat transfer path 170 through the exhaust gas heat exchanger 130, water boil heat exchanger 70, and the supply heat exchanger 68, and controls the supply heat exchanger bypassing valve 204 to be the supply heat exchanger mode.

At this time, as the control unit 210 controls the radiant heat exchanger bypassing valve 194 in accordance with the temperature of the heat medium, it controls the radiant heat exchanger bypassing valve 194 to be the radiant heat exchanger supply mode and when the temperature of the heat medium is over the set point, and it controls the radiant heat exchanger bypassing valve 194 to be the bypassing mode when the temperature of the heat medium is not more than the set point.

As describing the flowing of the heat medium in the heat transfer path 170, the heat medium in the heat transfer path 170 is heated as receiving the heat while passing through the exhaust gas heat exchanger 130 during the operation of the heat medium circulation pump 172, as illustrated in FIG. 2, and it streams into the water heat exchanger 70 as passing through the water boil/ radiant heat exchanger 130.

The heat medium flown into the water boil heat exchanger 70 heats the water boil heat exchanger 70 as transferring the heat to the water boil exchanger 70, and after that, it passes through or bypasses the radiant heat exchanger 160in accordance with the temperature condition of the system.

The heat medium passed through or by passed the radiant heat exchanger 160 is supplied as a supply heat exchanger 68 after passing through the supply heat exchanger bypassing valve 204, the temperature of it is raised by receiving heat from the high temperature and high pressure refrigerant gas passing through the supply heat exchanger 68, and it is circulated to the exhaust gas heat exchanger 130.

That is, the water boiling capacity of the water boil heat exchanger 70 of the co-generation is improved as the refrigerant of the heat pump type air conditioner 50 is condensed as the heat is taken away from the heat medium while passing through the supply heat exchanger, and as the heat of the exhaust gas of the exhaust gas heat exchanger 230 and the heat of the supply heat exchanger 68 are transferred to the water boil heat exchanger through the heat transfer path 170.

In the co-generation, the lower the temperature of the water supplied to the water boil heat exchanger 70 from the water boiling unit 78, the larger the amount of the heat transference of the water boil heat exchanger 70, and the heat medium passed through the water boil heat exchanger 70 recovers a lot of heat from the refrigerant while passing through the supply heat exchanger 68, and the consumption electricity of the compressor is reduced compared with the same air-cooling capacity of the heat pump type air conditioner 50.

The co-generation controls the refrigerant no to pass through the outdoor heat exchanger 60 as well as operating the heat pump type air conditioner 50 to be air-cooling mode when the heat pump type air-conditioner is under the air-cooling mode without request of water boiling as illustrated in FIG 3, and controls that the heat medium in the heat transfer path 170 is circulated through the exhaust gas heat exchanger 130 and supply heat exchanger 68.

The heat pump type air conditioner 50 controls the 4-way valve 54 to be the air-cooling mode as well as operating the compressor 52, opens the outdoor heat exchanger bypassing path opening and shutting valve 64C as well as shutting the outdoor heat exchanger opening and shutting valve 65A, and shuts the connection path opening and shutting valve.

The co-generation operates the heat medium circulation pump 172 for controlling the heat medium in the heat transfer path 170 to be circulated through the exhaust gas heat exchanger 130 and the supply heat exchanger 68, controls the water boil/ radiant heat exchanger bypassing valve 184 to be the water boil/ radiant heat exchanger supply mode, and controls the radiant heat exchanger bypassing valve 194 to be the radiant heat exchanger supply mode.

As describing the flowing of the refrigerant of the heat pump type air conditioner 50, the high-temperature and high-pressure refrigerant compressed at the compressor 52 is supplied to the supply heat exchanger passed through the 4-way valve 54 and condensed as the heat is taken away from the supply heat exchanger while passing the supply heat exchanger 68, and bypasses the outdoor heat exchanger 60.

The refrigerant bypassed the outdoor heat exchanger 60 is evaporated in the indoor heat exchanger 56 after expanded in the expansion valve 58 after transferred to the indoor machine I, and after that, transferred to the outdoor machine O and circulated to the compressor through the 4-way valve 54.

That is, the refrigerant of the heat pump type air conditioner 50 is condensed at the supply heat exchanger 68 and cools the indoor air as evaporated in the indoor heat exchanger 56.

As describing the flowing of heat medium of the heat transfer path 170, illustrated In FIG. 3, the heat medium in the heat transfer path 170 is boiled as receiving heat while passing through the exhaust gas heat exchanger 130 during the operation of the heat medium circulation pump 172, streams into the water boil heat exchanger 70 as passing through the water boil/ radiant heat exchanger bypassing valve 184, streams into the radiant heat exchanger 192 after passing through the water boil heat exchanger 70, and radiates heat to outside as passing through the radiant heat exchanger 192.

The heat medium radiated is supplied to the supply heat exchanger 68 after passing through the supply heat exchanger bypassing valve 204, the temperature of it gets higher as receiving heat from the high-temperature and high-pressure refrigerant gas passing through the supply heat exchanger 68, and then, circulated to the exhaust gas heat exchanger 130.

That is, the water boiling capacity of the water boil heat exchanger 70 of the co-generatican is improved as the refrigerant of the heat pump type air conditioner 50 is condensed as the heat of it is taken away from the heat medium while passing through the supply heat exchanger 68, and as the exhaust gas heat of the exhaust gas heat exchanger 130 and the heat of the supply heat exchanger 68 are transferred to the water boil heat exchanger 70 through the heat transfer path 170.

When the heat pump type air conditioner 50 is under the air warming mode without water boiling request, as illustrated in FIG. 4, the co-generation passes the refrigerant through the outdoor heat exchanger 60 as well as operating the heat pump type air-conditioner 50 to be air warming mode, and controls the heat medium in the heat transfer path 170 to be circulated through the exhaust gas heat exchanger 130 and water heat exchanger 70 or, as illustrated in FIG 5, controls the refrigerant not to be circulated through the outdoor heat exchanger 60 as well as operating the heat pump type air conditioner 50 to be the air warming mode, and controls the heat medium in the heat transfer path 170 to be circulated through the exhaust gas heat exchanger 130, water boil heat exchanger 70, and the supply heat exchanger 68.

It is desirable for the co-generation, as illustrated in FIG 4, to maximize the capacity of heat recovering to the water boil heat exchanger 70 and the capacity of water boiling as controlling the refrigerant to pass through the outdoor heat exchanger 60 and the heat medium in the heat transfer path 170 to be circulated through the exhaust gas heat exchanger 130 and the water heat exchanger 70 when the outdoor temperature is not cold enough for the outdoor heat exchanger not frosted over, and it is desirable for the co-generation, as illustrated in FIG 5, to prevent deterioration of the water boiling capacity may be generated when the outdoor heat exchanger 60 is frosted over as stopping the passing of refrigerant through the outdoor heat exchanger 60 and controlling the heat medium in the heat transfer path 170 to be circulated through the waste heat recovery heat exchanger 130, water boil heat exchanger 70, and the supply heat exchanger 68.

Reference will now be made in detail to the case passing the refrigerant to the outdoor heat exchanger 60 as well as operating the heat pump type air conditioner 50 to be the air warming mode controlling the heat medium in the heat transfer path 170 to be circulated through the exhaust gas heat exchanger 130 and the water boil heat exchanger 70, as illustrated in fig. 4.

The heat pump type air conditioner 50 controls the 4-way valve to be the air-warming mode as well as operating the compressor 52, shuts the outdoor heat exchanger bypassing path opening and shutting valve 65C as well as opening the outdoor heat exchanger opening and shutting valve 65A, and opens the connection path opening and shutting valve 66B.

As, describing the flowing of refrigerant in the heat pump type air conditioner 50, the high-temperature and high-pressure refrigerant compressed at the compressor 52 passes through the 4-way valve 54 and transferred to the indoor machine I, condensed while passing through the indoor heat exchanger 60 of the indoor machine I, and expanded while passing through the indoor expansion valve 58.

The refrigerant expanded at the indoor expansion valve 58 is transferred to the outdoor machine O and expanded again while passing through the outdoor expansion valve 59, and streams into the outdoor heat exchanger 60.

The refrigerant flown into the outdoor heat exchanger 60 evaporated while passing through the outdoor heat exchanger 60, passes through the supply heat exchanger 68 without heat exchanging, and circulated to the compressor 52 after passing through the 4-way valve 54.

That is, the refrigerant in the heat pump type air conditioner warms indoor as condensed at the indoor heat exchanger 56 and evaporated at the outdoor heat exchanger 60.

The control unit 210 controls the water boil/ radiant heat exchanger bypassing valve 184 to be the water boil/ radiant heat exchanger supply mode as well as operating the heat medium circulation pump 172 to circulate the heat medium in the heat transfer path 170 through the exhaust gas heat exchanger 130 and the water boil heat exchanger 70, and controls the supply heat exchanger bypassing valve 204 to be the supply heat exchanger bypassing mode.

As the control unit 210 controls the radiant heat exchanger bypassing valve 194 in accordance with the temperature, it controls the radiant heat exchanger bypassing valve 194 to be the radiant heat exchanger supply mode when the temperature of the heat medium is over the set point, and controls the radiant heat exchanger bypassing valve 194 to be the bypassing mode when the temperature is not more than the set point.

As describing the flowing of the heat medium in the heat transfer path 170, the heat medium in the heat transfer path 170 is heated as receiving heat while passing through the exhaust gas heat exchanger 130 during the operation of the heat medium circulation pump 172, illustrated in FIG 4, and streams into the water boil heat exchanger 70 as passing through the water boil/ radiant heat exchanger bypassing valve 184.

The heat medium flown into the water boil heat exchanger 70 heats the water boil heat exchanger as transferring heat to the water boil heat exchanger 70, and passes through or bypasses the radiant heat exchanger 160 in accordance with the temperature condition and etc of the system.

The heat medium passed through or bypassed the radiant heat exchanger 160 bypasses the supply heat exchanger 68 after passing through the supply heat exchanger bypassing valve 204, and circulated through the radiant heat exchanger 130.

That is, the water boiling capacity of the water boil heat exchanger 70 of the co-generation is improved as the heat of the radiant heat exchanger 130 is transferred to the water heat exchanger 70 through the heat transfer path 170.

Reference will now be made in detail to the case not passing the refrigerant to the outdoor heat exchanger 60 as well as operating the heat pump type air conditioner 50 to be the air warming mode and controlling the heat medium in the heat transfer path 170 to be circulated through the exhaust gas heat exchanger 130, water boil heat exchanger 70, and the supply heat exchanger 68.

The heat pump type air conditioner 50 controls the 4-way valve 54 to be the air warming mode as well as operating the compressor 52, and opening the outdoor heat exchanger bypassing valve 65 as well as shutting the outdoor heat exchanger bypassing valve 64 and the connection path opening and shutting valve 67.

As describing the flowing of the refrigerant of the heat pump type air conditioner 50, the high-temperature and high-pressure refrigerant compressed at the compressor 52 is transferred to the indoor machine I as passing through the 4-way valve, condensed while passing through the indoor heat exchanger 60 of the indoor machine 1, and expanded while passing through the indoor expansion valve 58.

The refrigerant expanded at the indoor expansion valve 58 is transferred to the outdoor machine O and expanded again while passing through the outdoor expansion valve 59, and bypasses the outdoor heat exchanger 60.

The refrigerant bypassed the outdoor heat exchanger 60 is evaporated as receiving heat from the supply heat exchanger 68 while passing through the supply heat exchanger 68, and is circulated to the compressor after passing through the 4-way valve 54.

That is, the refrigerant 50 of the heat pump type air conditioner 50 is condensed at the indoor heat exchanger 56, and is warming the indoor air as evaporated at the supply heat exchanger 68.

The control unit 210 controls the water boil/ radiant heat exchanger bypassing valve 184 to be water boil/ radiant heat exchanger supply mode as well as operating the heat medium circulation pump 172 for the heat medium in the heat transfer path 170 to be circulated through the exhaust gas heat exchanger 130, water boil heat exchanger 70, and the supply heat exchanger 68, and controls the supply heat exchanger bypassing valve 204 to be the supply heat exchanger supply mode.

As the control unit 210 controls the radiant heat exchanger bypassing valve 194 in accordance with the temperature of the heat medium, it controls the radiant heat exchanger bypassing valve 194 to be the radiant heat exchanger supply mode when the temperature of the heat medium is over the set point, and it controls the radiant heat exchanger bypassing valve 194 to be bypassing mode when the temperature of the heat medium is not more than the set point.

As describing the flowing of the heat medium in the heat transfer path 170, the heat medium in the heat transfer path 170 is heated as receiving heat while passing through the exhaust gas heat exchanger 130 during the operation of the heat medium circulation pump 172, illustrated in FIG. 5, and it streams into the water boil heat exchanger 70 after passing through the water/ radiant heat exchanger bypassing valve 184.

The heat medium flown into the water boil hea0t exchanger 70 heats the water boil heat exchanger 70 as transferring heat, and passes through or by passes the radiant heat exchanger 160 in accordance with the temperature condition of the system.

The heat medium passed through or bypassed the radiant heat exchanger 160 is supplied to the supply heat exchanger 68 through the supply heat exchanger bypassing valve 204, evaporates the refrigerant as heating the refrigerant passing through the supply heat exchanger 68, and is circulated to the waste heat recovery heat exchanger 130.

That is, the water boiling capacity of the water heat exchanger 70 of the co-generation is improved as the heat of the waste heat recovery heat exchanger 130 is transferred to the water boil heat exchanger 70 through the heat transfer path 170, and the frosting g and the following problem, reducing of the air warming capacity may be generated when the refrigerant passes through the outdoor heat exchanger 60 are prevented as the supply heat exchanger 68 can stop passing the refrigerant through the outdoor heat exchanger as operating as a evaporator.

The co-generation controls the refrigerant no to pass through the outdoor heat exchanger 60 as well as operating the heat pump type air conditioner 50 to be the air warming mode, and controls the heat medium in the heat transfer path 170 not to be circulated through the exhaust gas heat exchanger 130, supply heat exchanger 68, and the water boil heat exchanger 70 when the heat pump type air conditioner 50 is under the air warming mode without water boiling request, illustrated in FIG. 6.

The heat pump type air conditioner 50 controls the 4-way valve 54 to be the air warming mode as well as operating the compressor 52 and opens the outdoor heat exchanger bypassing valve 65 as well as shutting the outdoor heat exchanger outlet valve 64 and the connection path opening and shutting valve 67.

As describing the flowing of the refrigerant in the heat pump type air conditioner 50, the high-temperature and high-pressure refrigerant compressed at the compressor 52 is transferred to the indoor machine as passing through the 4-way valve 54, condensed while passing through the indoor heat exchanger 60 of the indoor machine I, and expanded while passing through the indoor expansion valve 58.

The refrigerant expanded at the indoor expansion valve 58 is transferred to the outdoor machine O and expanded again while passing through the outdoor expansion valve 59, and bypasses the outdoor heat exchanger 60.

The refrigerant bypassed the outdoor heat exchanger 60 is evaporated while passing through the supply heat exchanger 68, and circulated to the compressor 52 as passing through the 4-way valve 54.

That is, the refrigerant of the heat pump type air conditioner 50 warms the indoor air as condensed at the indoor heat exchanger 56 and evaporated at the supply heat exchanger 68.

The control unit 210 operates the heat medium circulation pump 172 for the heat medium in the heat transfer path 170 to be circulated through the exhaust gas heat exchanger 130 and the supply heat exchanger 68, and controls the water boil/ radiant heat exchanger bypassing valve 184 to be the water boil/ radiant heat exchanger bypassing mode for the heat medium not to pass through the water boil heat exchanger 70.

As describing the flowing of the heat medium of the heat transfer path 170, during the operation of heat medium circulation pump 172, as illustrated in FIG. 6, the heat medium in the heat transfer path 170 is heated as receiving heat while passing through the exhaust gas heat exchanger 130, then, bypasses the water boil heat exchanger 70 the radiant heat exchanger 160, and stream into the supply heat exchanger 68.

The heat medium flown into the supply heat exchanger 68 evaporates the refrigerant as heating the refrigerant passing through the supply heat exchanger 68, and is circulated to the exhaust gas heat exchanger 130.

That is, the heat of the waste heat recovery heat exchanger 130 of the co-generation having the water boil function is not transferred to the water boil heat exchanger 70, but is centralized to the supply heat exchanger 68, and the consumption electricity of the compressor 52 is reduced as the pressure is risen with the evaporation of the refrigerant of the heat pump type air-conditioner 50 at the supply heat exchanger 68.

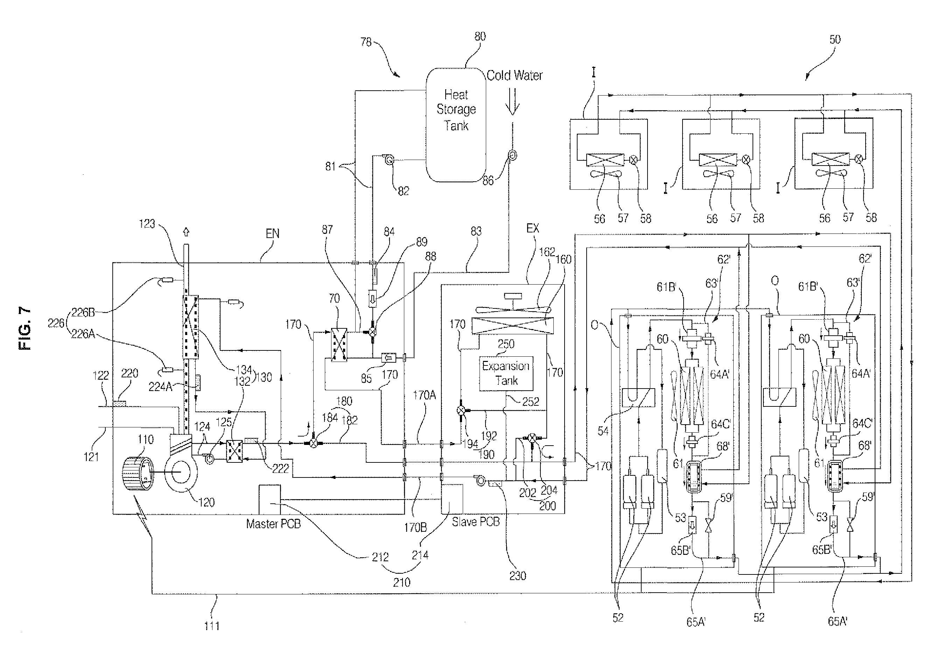

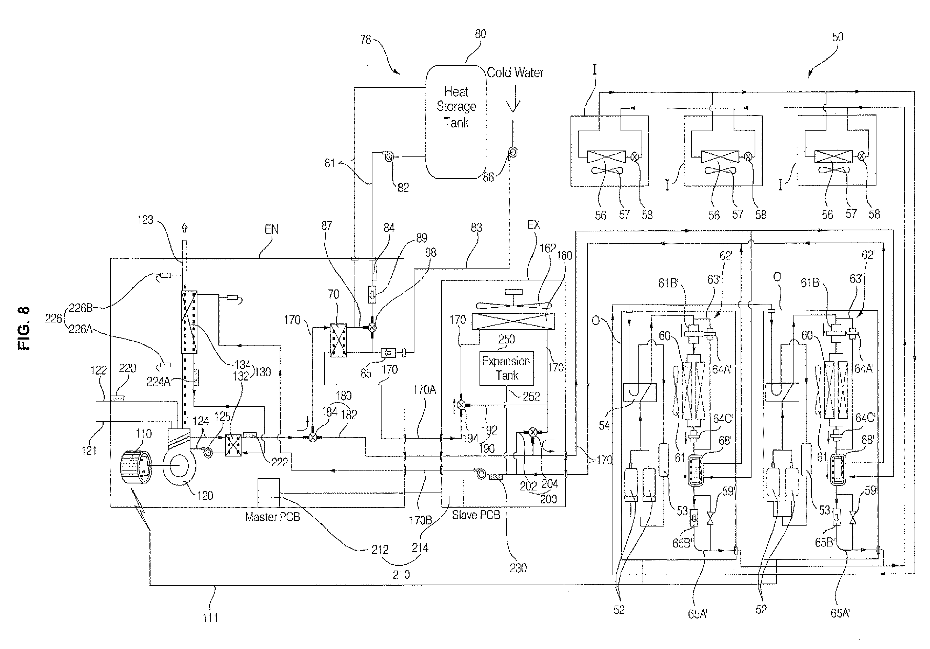

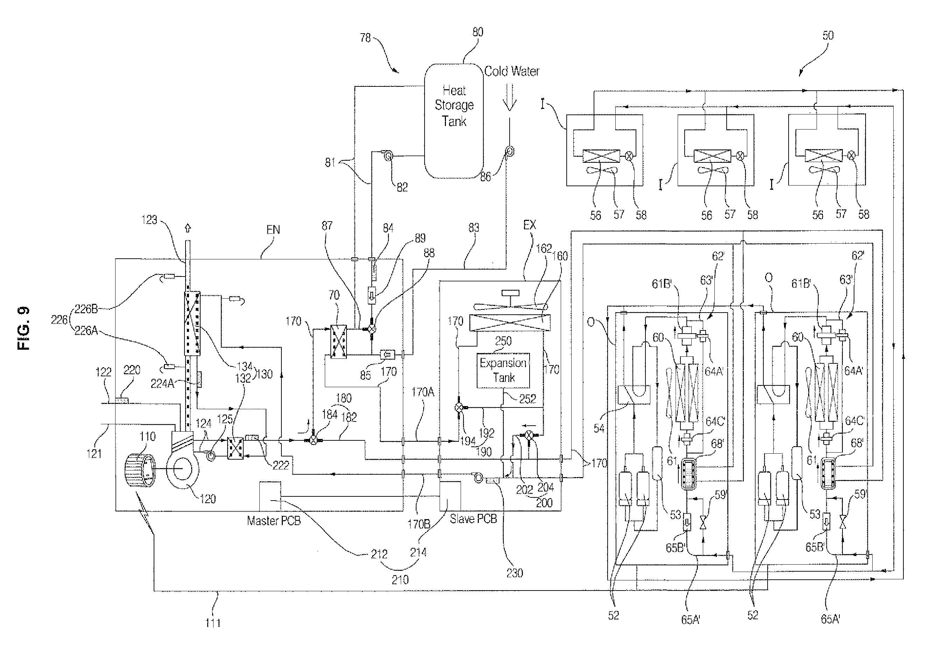

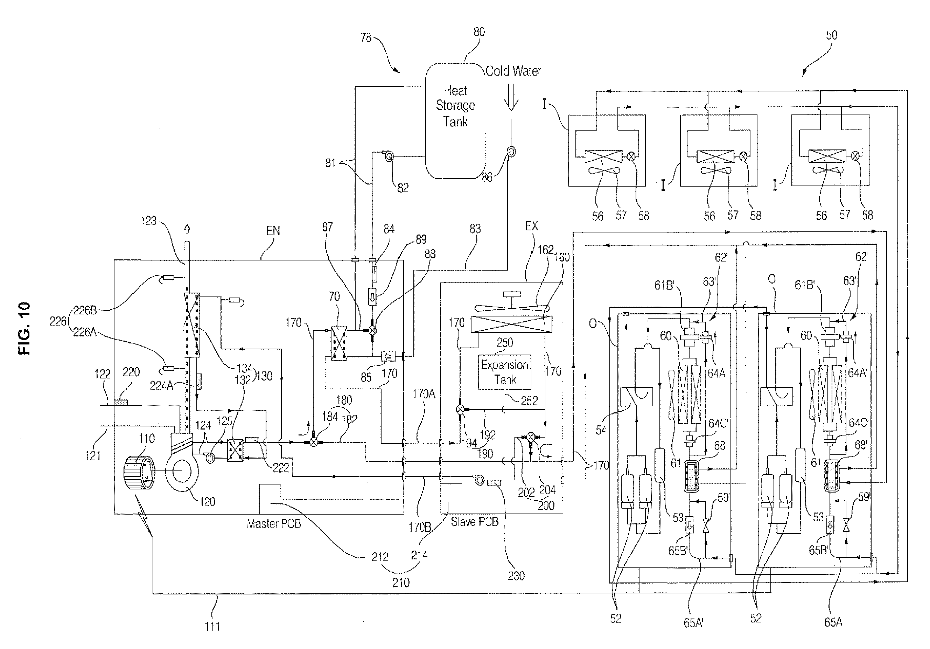

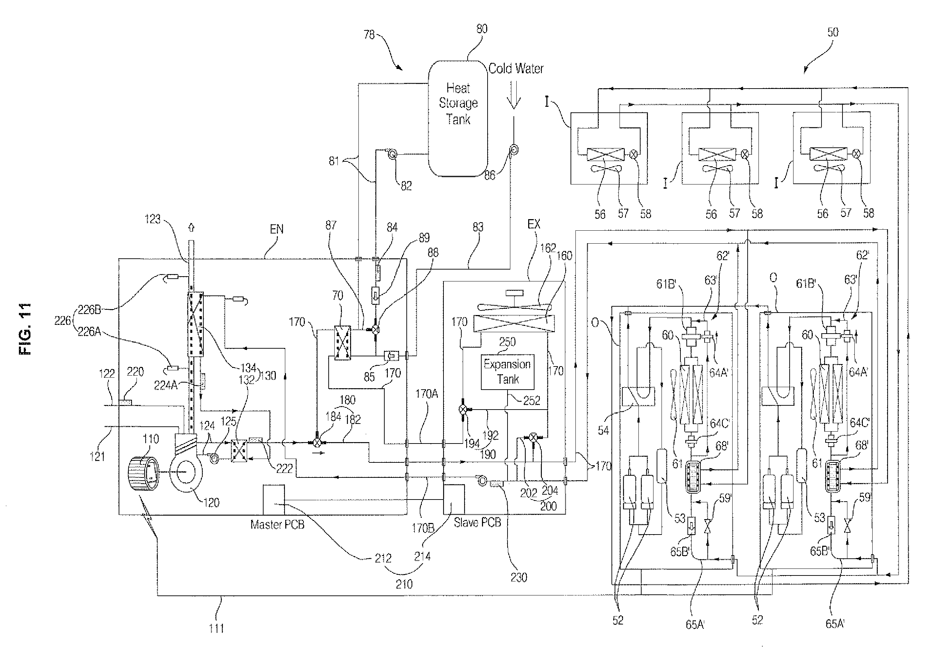

FIG. 7 is a block diagram illustrating the air conditioner of another embodiment of the co-generation according to the present invention operating for air-cooling under the not water boil mode, FIG. 8 is a block diagram illustrating the air conditioner of another embodiment of the co-generation according to the present invention operating for air-cooling under the not water boil mode, FIG. 9 is a block diagram illustrating the condition that the air conditioner of another embodiment of the co-generation according to the present invention operates for air warming under the outdoor fan control mode and the water boil mode, FIG. 10 is a block diagram illustrating the air conditioner of an embodiment of the co-generation according to the present invention operating for air warming under the low-pressure control mode and the water boil mode, and FIG. 11 is a block diagram illustrating the air conditioner of an embodiment of the co-generation according to the present invention operating for air warming under the maximum supply mode and the not water boil mode.

The supply heat exchanger 68 of the co-generation according to the present invention is installed at the inside of the outdoor machine O of the heat pump type air conditioner 50 as illustrated in FIGS. 7 to 11.

The heat pump type air conditioner 50 further comprises an outdoor heat exchanger bypassing apparatus 62' bypassing the refrigerant through the outdoor heat exchanger 60.

The outdoor heat exchanger bypassing apparatus 62' includes an outdoor heat exchanger bypassing path 63' that an end is connected with the refrigerant path connected with the inlet side of the outdoor heat exchanger 60 and the other end is connected with the refrigerant path connected with the outlet side of the outdoor heat exchanger 60 during the air-cooling and the air heating operations.

An outdoor heat exchanger bypassing apparatus opening and shutting valve 64A' opening and shutting the outdoor heat exchanger bypassing path 63 is installed at the outdoor heat exchanger bypassing path 63'. Further, the outdoor heat exchanger bypassing apparatus 62' includes a refrigerant path connected with the inlet side of the outdoor heat exchanger 60 and outdoor heat exchanger opening and shutting valve 64B' and 64C' installed at the refrigerant path connected with the outlet side.

In the heat pump type air conditioner 50, an outdoor expansion valve 59' is installed on the refrigerant path connecting the outdoor heat exchanger 60 and the outdoor expansion valve 59 of the indoor machine I.

An outdoor expansion bypassing path 65A' bypassing the through the outdoor expansion valve 59 during the air-cooling operation, and a check valve 65' installed at the outdoor expansion valve bypassing path 65A' for streaming the refrigerant to the outdoor expansion valve 59' without passing through the outdoor expansion valve bypassing path 64A' during the air heating operation.
The supply heat exchanger 68 is installed on the refrigerant path between the outdoor expansion valve bypassing path 65A' and the outdoor heat exchanger 60.

Here, the heat pump type air conditioner 50, as illustrated in FIGS. 7 to 8, shuts the outdoor heat exchanger bypassing path opening and shutting valve 64A' as well as opening the outdoor heat exchanger opening and shutting valve 64B' and 64C' during the air-cooling operation, the refrigerant passes through the supply heat exchanger 68' as well as passing through the outdoor heat exchanger 60 and bypasses the outdoor expansion valve 59.

In case that the heat pump type air conditioner 50 is under the air-cooling operation and has a water boiling request, the super cooling isn't working well or the air-cooling capacity is decreased by the lack of the refrigerant if the refrigerant is condensed firstly at the supply heat exchanger and is condensed again at the outdoor heat exchanger, however, in case that the refrigerant is condensed again as while passing through the supply heat exchanger 68' after condensed at the outdoor heat exchanger 60 as illustrated in FIG. 7, the supper cooling is well worked when the temperature of the refrigerant passing through the supply heat exchanger 68' is lower, the lack of the refrigerant is prevented, and the decreasing of the air-cooling operation capacity is prevented.

The heat pump type air conditioner 50 shuts the outdoor heat exchanger bypassing path opening and shutting valve 64A' as well as opening the outdoor heat exchanger opening and shutting valve 64B' and 64C', and the refrigerant passes through the outdoor heat exchanger 60 after passing through the expansion valve 59' and the supply heat exchanger 68' during the outdoor fan control air heating operation as illustrated in FIG. 9.

Furthermore, the heat pump type air conditioner 50 opens the outdoor heat exchanger bypassing path opening and shutting valve 64A' as well as shutting the outdoor heat exchanger opening and shutting valve 64B' and 64C', and the refrigerant bypasses the outdoor heat exchanger after passing through the outdoor expansion valve 59' and the supply heat exchanger 68' during the low-pressure control air-heating operation and the maximum supply air-heating operation as illustrated in FIGS. 10 and 11.

On the other hand, the present invention is not limited to the above embodiment, and it is possible to be composed of the water boil heat exchanger 70, the water boil heat exchanger bypassing apparatus, the supply heat exchanger 68, and the supply heat bypassing apparatus 200 without the radiant heat exchanger 160 and the radiant heat exchanger bypassing apparatus 190, for the supply heat exchanger 68' to be installed on the refrigerant path between the outdoor expansion valve bypassing path 65A' and the outdoor heat exchanger 60 as located a the outside of the outdoor machine O, and other various embodiments are possible in the technical range including the present invention.

Reference will now be made in detail to the effects of the co-generation of the present invention configured as above.

The co-generation of the present invention has some advantages in that the entire length of the exhaust pipe and the installing costs are reduced as the numbers of the long pipes are reduced compared with the case that the water boil heat exchanger and the water boil heat exchanger bypassing valve are installed at the outside of the engine unit as all of the engine, the electric generator, the waste heat recovery heat exchanger, the water boil heat exchanger, the water heat exchanger bypassing path, and the water boil heat exchanger bypassing valve are installed at the engine unit.

Furthermore, the co-generation of the present invention has some advantages in that the super cooling works well when the refrigerant passes through the supply heat exchanger as the refrigerant condensed at the outdoor heat exchanger is condensed once more at the supply heat exchanger, the lack of the refrigerant is prevented, and the reduction of the air-cooling capacity is prevented during the air -cooling operation.

## Claims

1. A co-generation comprising: an electric generator (110); an engine operating the electric generator (110); a waste heat recovery heat exchanger (130) recovering the waste heat of the engine (120); a water boil heat exchanger (70) boiling water; a hot water storage tank (80) connected with the water boil heat exchanger (70) and a water circulation path (81); a water supply path (83) connected with the water circulation path (81); a water boil heat exchanger bypassing path (87) formed at the water circulation path (81); a water boil heat exchanger bypassing valve (88) controlling the water boil heat exchanger bypassing path (87); an air conditioner (50) air conditioning the indoor air; a supply heat exchanger (68) installed on the refrigerant path of the air conditioner (50) ; and a heat transfer path (170) connecting the waste heat recovery heat exchanger (130), the water boil heat exchanger (70), and the supply heat exchanger (68),
wherein all of the engine (120), the electric generator (110), the waste heat recovery heat exchanger (130), water boil heat exchanger (70), and the water boil heat exchanger bypassing path (87) and the water boil heat exchanger bypassing valve (88) are installed at the engine unit (EN).

2. The co-generation according to claim 1,
wherein the engine unit (EN) is installed underground of the construction where the co-generation is installed.

3. The co-generation according to claim 2,
wherein the hot water storage tank (80) is installed underground of the construction.

4. The co-generation according to claim 1 or 2,
wherein the water circulation path (81) is connected with the water supply path (83).

5. The co-generation according to the one of claims 1 to 4,
wherein the co-generation further comprises:
a radiant heat exchanger (160) connected with the heat transfer path (170) for radiating heat to outside;
a water boil/radiant heat exchanger bypassing path (182) and a water boil/radiant heat exchanger bypassing valve (184) formed at the heat transfer path (170) ;
a radiant heat exchanger bypassing path (192) and radiant heat exchanger bypassing valve (194) formed at the heat transfer path (170) ;
a supply heat exchanger bypassing path (202) and a supply heat exchanger bypassing valve (204) formed at the heat transfer path (170).

6. The co-generation according to claim 5,
wherein all of the radiant heat exchanger, the radiant heat exchanger bypassing path (192), the radiant heat exchanger bypassing valve (194), the supply heat exchanger bypassing path (202), and the supply heat exchanger bypassing valve (204) are installed at the heat exhaust unit (EX).

7. The co-generation according to claim 6,
wherein the heat exhaust unit (EX) is installed around the air conditioner (50).

8. The co-generation according to claim 6,
wherein the heat transfer path (170) is installed as long from the engine unit (EN) to the heat exhaust unit (EX) and the supply heat exchanger (68).

9. The co-generation according to claim 5,
wherein the water boil/radiant heat exchanger bypassing path (182) is installed as long from the engine unit (EN) to the heat exhaust unit (EX).

10. The co-generation according to claim 5,
wherein the water boil/radiant heat exchanger bypassing valve (184) is installed at the engine unit (EN).

11. The co-generation according to the one of claims 1 to 4,
wherein the air conditioner (50) is a heat pump type air conditioner composed of an outdoor machine (O) installed in the outside including a compressor (52), a 4-way valve (54), an outdoor heat exchanger (60) and a outdoor expansion (59), and an indoor machine (I) installed in the inside including an indoor heat exchanger (56) and an expansion apparatus (58).

12. The co-generation according to claim 11,
wherein the supply heat exchanger (68) is installed at in the inside of the outdoor machine (O).
